# EUROPEAN PATENT APPLICATION

(11) **EP 4 654 167 A1**
(43) Date of publication of application: **26.11.2025**
(21) Application number: 24177153.4
(22) Date of filing: 21.05.2024
(51) Int. Cl.: G08C 17/00, H02J 50/00, G05G 1/02

(54) **OPERATING DEVICE FOR CONTROLLING A FUNCTION OF A MACHINE**

(71) Applicant: elobau GmbH & Co. KG, 88299 Leutkirch im Allgäu (DE)
(72) Inventor: Schlauch, Robert, 87730 Bad Grönenbach (DE); Joos, Sascha, 88279 Amtzell (DE)
(74) Representative: Knöner, Gregor

(57) **Abstract**

An operating device for controlling a function of a machine, for example of an agricultural or constructional vehicle, is provided. The operating device (2) comprises: an energy generating unit (4) configured to generate electrical energy upon actuation by a user of the operating device (2), wherein the energy generating unit (2) is actuatable in a first direction and is actuatable in a second direction and is configured to generate the electrical energy when actuated in the first direction and/or in the second direction; and a controller (6) configured to transmit, upon actuation of the energy generating unit (2) in the first direction, a first control signal (8) indicating the actuation in the first direction, and upon actuation of the energy generating unit in the second direction, to transmit a second control signal (10) different from the first control signal and indicating the actuation in the second direction. The controller (6) is at least partly operated with electrical energy generated by the energy generating unit (4).

## Description

### FIELD OF THE INVENTION

The present invention relates to an operating device for controlling a function of a machine, the operating device comprising an energy generating unit and a controller. It further relates to a method of operating an operating device for controlling a function of a machine. A respective machine may further be provided.

### BACKGROUND

Operating elements such as joysticks or knobs are regularly used to control functions of a machine, such as of a construction vehicle or agricultural vehicle. Operating elements for controlling functions of the machine are normally wired and it is therefore difficult to integrate afterwards additional operating elements into an existing machine. In particular, it requires the installation of new cables, which is often not possible or only possible with great effort due to poor accessibility. There are control elements that communicate wirelessly. However, such systems have the problem of needing a supply with power, as there is no connection to the machine's power source. In addition, the actuation status of the control element cannot be reliably detected.

It is therefore desirable to reliably detect the actuation of an operating device, for example of an operating element such as a knob of the operating device, without the respective drawbacks. In particular, it is desirable to be able to fully implement the functionalities of a wired operating element.

### SUMMARY

Accordingly, there is a need to mitigate at least some of the drawbacks mentioned above and to provide an improved detection of the actuation of an operating element, and in particular of a self-contained operating element.

This need is met by the features of the independent claims. The dependent claims describe embodiments of the invention.

According to an embodiment of the invention, an operating device for controlling a function of a machine is provided. The operating device comprises an energy generating unit configured to generate electrical energy upon actuation by a user of the operating device, wherein the energy generating unit is actuatable in a first direction (e.g. push) and is actuatable in a second direction (e.g. release); and a controller (e.g. microcontroller) configured to transmit, upon actuation of the energy generating unit in the first direction, a first control signal indicating the actuation in the first direction, and upon actuation of the energy generating unit in the second direction, to transmit a second control signal different from the first control signal and indicating the actuation in the second direction. The controller is at least partly operated with electrical energy generated by the energy generating unit.

By transmitting the first control signal upon actuation of the energy generating unit in the first direction and the second control signal upon actuation of the energy generating unit in the second direction, reliable detection of the actuation state of the energy generating unit and in particular the actuation of an operating element such as a knob that is coupled to the energy generating unit is possible. It is thus possible to detect and transmit different states, namely the state of "pressing" the knob and the state of "releasing" the knob. The operating element may in other implementations be an element which can be turned to the left and right or which can be moved or slid forward and backward.

In an embodiment, the controller may be configured to transmit a third control signal that is different from the first and second control signal, wherein the third control signal is indicative of an error state of the operating device. The operating device may be configured to detect a respective error state. For example, the operating device may be configured to detect one or more of the following error states: a malfunction of a (electrical) component of the operating device; an overlap of a generated and/or stored first actuation signal and second actuation signal generated by the energy generating unit upon actuation in the first and second directions, respectively; a loss of an electrical connection; and other types of malfunctions of the operating device.

Preferably, the first control signal is received by a receiver unit of a receiver device, wherein a controller of the receiver unit is configured to activate a first functional state of the function of the machine when the first control signal is received by the controller of the receiver unit and to maintain the first functional state or to activate a second functional state, which is different from the first functional state, when the second control signal is received by the controller of the receiver unit.

The energy generating unit preferably generates energy by actuating the operating device in the first and/or second direction. When the energy generating unit is actuated in the first direction, electrical power, in particular a voltage signal, is provided at a first terminal of the energy generating unit (or between the first terminal and a second terminal of the energy generating unit) and/or when the energy generating unit is actuated in the second direction, electrical power, in particular a voltage, is provided at a second terminal of the energy generating unit (or between the second terminal and the first terminal of the energy generating unit). In this way, the operating device can detect the actuation of the operating device in different directions. In particular, the pressing and releasing of an operating element such as a knob which is coupled to the energy generating unit can be detected. Preferably, when the energy generating unit is actuated in the first direction, a return member, for example a spring element, is pretensioned and when the actuation of the energy generating unit in the first direction is stopped, the energy generating unit is moved in the second direction by action of the return member.

Preferably, the energy generating unit is an energy harvester that converts mechanical energy applied by the user into electrical energy. The energy harvester preferably has a double coil with an iron core and a magnet block. By moving the magnetic block in the first or second direction as a result of the actuation of the operating device and in particular by pressing a knob of the operating device (explained below), mechanical energy is converted into electrical energy by the resulting electromagnetic effect. A voltage signal is induced at the first terminal of the energy harvester when the magnetic block is moved in the first direction and a voltage signal is induced at the second terminal of the energy harvester when the magnetic block is moved in the second direction upon reverse of the polarity of a magnetic field. The induced voltage at the first or second terminal is used for supplying the controller with power. Other types of energy generating units may also be employed.

The operating device may be used for controlling a function of a machine, preferably of an agricultural or constructional vehicle. For example, the operating device is used for controlling a horn, a light, a power take-off shaft, in particular for driving a drive shaft of an add-on device, a lifting gear or hydraulics, for example for coupling or uncoupling an add-on device. Preferably, the operating device comprises a specific function ID or is associated with a specific function ID, wherein the specific function ID is assigned to a function of the machine to be controlled. Preferably the function ID is transmitted together with the first or second control signal. In this way, the receiver unit knows which function of the machine is to be controlled with the received first or second control signal transmitted by the controller of the operating device.

Preferably, the energy generating unit supplies the controller with a power supply voltage U_BAT. This may occur via a rectifier that rectifies a voltage generated by the energy generating unit and/or via a regulator or other voltage stabilizing component that provides a stabilized power supply voltage. Preferably, the power supply voltage of the controller is provided by a linear voltage regulator as U_BAT. Thus, by being operated on the supply voltage, the controller can read in and process actuation signals from the energy generating unit and generate and transmit the first and/or second control signals.

Preferably, the operating device is a self-contained operating device without any cable connection for receipt of electrical power or transmission of control signal. The energy generating device may be the only power source of the operating device, or the operating device may comprise one or more additional self-contained power sources supplying electrical power to the controller.

The controller may comprise a transmitter unit configured to transmit wirelessly the first and/or second control signal (an optionally the third control signal) generated by the controller to a receiver unit. Preferably, the transmitter unit is a Bluetooth transmitter configured to transmit the first and/or second control signals via Bluetooth, in particular via Bluetooth Low Energy, BLE. BLE requires little energy and is therefore suitable for transmitting the signals of the operating device, which only has a small amount of electrical energy available, namely the electrical energy provided by the energy generating unit. Alternatively, the transmitter unit is configured to transmit the control signals using other communication standards such as ZigBee, Wifi, RFID, EnOcean and the like.

Preferably, the transmission of signals only comprises the transmission of signals from the transmitter unit to the receiver unit.

The transmission unit of the operating device may be a transceiver or the operating device may comprise a receiving unit configured to receive signals from the receiver unit. Preferably the receiver unit may be a transceiver or may comprise a transmitting unit configured to transmit signals to the operating device. In some optional implementations, after receiving the first or second control signal from the controller of the operating device at the receiver unit, the receiver unit being a transceiver (or comprising a transmitting unit) may be configured to transmit a confirmation signal back to the controller of the operating device as feedback for the successfully received first and/or second control signal. The confirmation signal may be received by the receiving unit (or the transceiver) of the operating device. More preferably, no further data packages of the first or second control signal are sent from the transmitter unit of the operating device to the receiver unit after receipt of the confirmation signal at the operating device, so that the remaining energy of the operating device can be saved. For example, there may be an additional storage device, e.g. a battery, in the operating device in which the remaining energy can be stored.

The wireless operating device has the advantage that it is not necessary to install cables on the machine to be able to use the operating device. In particular, integration into an existing system may be carried out via software by logging on to an existing wireless receiver and no longer via physical cabling. Thus, cables and cable harnesses, which can be difficult to install, especially on machine parts that are difficult to access, can be saved compared to wired operating devices. In addition, the operating device can be easily mounted on the machine at any desired position. The operating device and/or a controller coupled to the receiver can be programmed to control a specific function of a machine. When desired, the operating device and/or controller can be reprogrammed so that a different function of the machine can be controlled with the operating device. This makes the use of the operating device very flexible. The operating device can be mounted or held in the operator's hand, enabling more ergonomic operation of the machine. For example, the operating device can be used as a remote control for controlling attachments. This means that even larger systems can be expanded easily, quickly and with a low risk of error.

Further, due to the energy generating unit, the operating device is self-sufficient and no additional power source and therefore no batteries or rechargeable batteries are required. This avoids the need for servicing the operating device and has a positive effect on the environment.

Preferably, the operating device comprises an operating element such as a knob (which is preferably coupled to the energy generating unit), and by pressing the knob, the energy generating unit is actuated in the first direction and by releasing the pressed knob, the energy generating unit is actuated in the second direction. Alternatively, the operating element may be a button or switch that can assume a first state and a second state, wherein when the button or switch is set to or assumes the first state, the energy generating unit is actuated in the first direction and when the button or switch is set to or assumes the second state, the energy generating unit is actuated in the second direction.

Preferably, a return member, e.g. a spring, is pretensioned when the knob is pressed and the energy generating unit is actuated in the first direction. When the knob is released, the return member, e.g. the spring, is released and the knob returns to its original position, thereby actuating the energy generating unit in the second direction.

Preferably, the energy generating unit is configured to generate a first actuation signal upon actuation in the first direction and to generate a second actuation signal upon actuation in the second direction, wherein the operating device comprises a signal storage unit configured to (e.g. temporarily) store the first actuation signal upon generation thereof and to (e.g. temporarily) store the second actuation signal upon generation thereof. The first actuation signal is preferably a voltage signal provided at a first terminal of the energy generating unit and the second actuation signal is preferably a voltage signal provided at a second terminal of the energy generating unit. E.g., a voltage may be generated across the first and second terminals of the energy generating unit (first actuation signal) and a voltage of reverse polarity may be generated across the first and second terminals of the energy generating unit (second actuation signal).

The time required for the controller to start up and read its inputs may be longer than the duration of the first/second actuation signal or the voltage signal provided at the terminals of the energy generating unit. As a result, the voltage at the energy generating unit may have been already dropped before the controller is ready for operation, which makes it impossible to detect the first/second actuation signal. The storage unit makes it possible to store the first and/or second actuation signals in a distinguishable way, at least until the controller has booted up and its input terminals are ready to read in the stored first and/or second actuation signals.

Preferably, the controller is configured to generate and transmit the first control signal upon reading the stored first actuation signal from the signal storage unit and is configured to generate and transmit the second control signal upon reading the stored second actuation signal from the signal storage unit. The controller may comprise a first input terminal configured to read the stored first actuation signal from the signal storage unit and a second input terminal configured to read the stored second actuation signal from the signal storage unit.

Preferably, the controller queries the system states and, in particular, the first and/or second actuation signals read in at the input terminals of the controller. In particular, the controller may be configured to generate and transmit the first or second control signals as a message.

Preferably, the first control signal or the second control signal is transmitted as a message containing an "actuation state", wherein a first actuation state is transmitted when the first actuation signal is read at the first input terminal of the controller and a second actuation state is transmitted when the second actuation signal is read at the second input terminal of the controller. In particular, the first actuation state may be indicative of a pressing of the knob of the operating device and the second actuation state may be indicative of a releasing of the knob of the operating device.

Preferably, apart from the "actuation state", the message contains further information such as the specific function ID of the operating device and/or a transmitter address of the operating device. Thus, when transmitting the first and/or second control signal (or message generated based on the first or second control signal), a controller coupled to the receiver unit can read out the transmitted function ID and actuation state and can control the function of the machine associated with the transmitted function ID in accordance with the transmitted actuation state.

Preferably, the signal storage unit comprises an electrical storage circuit such as a capacitor-based storage circuit, or a logical storage circuit such as a bi-stable logical circuit, e.g. a RS-flipflop.

The logical storage circuit may comprise a first and second input and a first and second output, wherein the first input is connected to the first terminal of the energy generating unit and the second input is connected to the second terminal of the energy generating unit, and wherein the first output is connected to the second input terminal of the controller and the second output is connected to the first input terminal of the controller.

When the first actuation signal is provided at the first terminal of the energy generating unit, a signal "high" or "1" may be applied to the first input of the logical storage circuit and a signal "low" or "0" may be applied to the second input of the logical storage circuit. Then a signal "high" or "1" may be applied to the second output and a signal "low" or "0" may be applied to the first output. In this case, a voltage signal is read in at the first input terminal of the controller which is connected to the second output of the logical storage circuit and the controller transmits the first control signal.

When the second actuation signal is provided at the second terminal of the energy generating unit, a signal "low" or "0" may be applied to the first input and a signal "high" or "1" may be applied to the second input. Then a signal "low" or "0" may be applied to the second output and a "high" or "1" signal may be applied to the first output. In this case, a voltage signal is read in at the second input terminal of the controller which is connected to the first output of the logical storage circuit and the controller transmits the second control signal. The signal at the first or second output of the logical storage circuit is preferably stored until the voltage of the operating device falls below a certain value or until another signal is present at the inputs of the logical storage circuit.

It should be clear that the input terminal and/or the output terminals may be reversed, and that any of the input terminals of the controller may be regarded as the first or second input terminal. In particular, the inputs to the controller may be configurable so that either controller terminal may receive the first or second output from the logical storage circuit. The labeling has merely been chosen such that if the first output terminal of the energy generating unit provides a voltage signal, then the logical storage circuit provides a logic high at the first input terminal of the controller (and correspondingly for the second output/input terminals).

The bi-stable logical storage circuit may be implemented by a pair of cross-coupled NOR-gates.

The electrical storage circuit may comprise a first capacitor unit coupled to a first terminal of the energy generating unit that gives out the first actuation signal and a second capacitor unit coupled to a second terminal of the energy generating unit that gives out the second actuation signal, wherein each of the first and second capacitor units has at least one capacitor. The first capacitor unit may be configured to store (e.g. temporarily) the first actuation signal by charging of the first capacitor unit from electrical power provided by the first actuation signal on the first terminal and the second capacitor unit is configured to store (e.g. temporarily) the second actuation signal by charging of the second capacitor unit from electrical power provided by the second actuation signal on the second terminal. The electrical storage circuit enables fast charging due to the almost non-existent charging resistance.

Preferably, the other terminal of the first capacitor unit and the second capacitor unit (i.e. terminal other than the terminal that is connected to the first or second terminal of the energy generating unit) is electrically connected or coupled to a common neutral point or ground.

Preferably, the electrical storage circuit comprises a first diode electrically connected in series between the first terminal of the energy generating unit and the first capacitor unit, and/or a second diode electrically connected in series between the second terminal of the energy generating unit and the second capacitor unit, wherein the first and/or second diode is configured to prevent the first and/or second capacitor unit from being discharged in the direction of the energy generating unit. In particular, the reverse direction of the diode prevents discharging in the opposite direction (i.e. in direction of the energy generating unit) when the input voltage drops. Preferably, the first and/or second diodes are Schottky diodes.

Preferably, the electrical storage circuit comprises a first resistor unit having at least one resistor electrically connected in series between the first capacitor unit and the controller (in particular the first input terminal of the controller), and a second resistor unit having at least one resistor electrically connected in series between the second capacitor unit and the controller (in particular the second input terminal of the controller). The first actuation signal may be read by discharging of the first capacitor unit via the first resistor unit and the second actuation signal may be read by discharging of the second capacitor unit via the second resistor unit.

Preferably, the operating device comprises an overvoltage protection unit configured to limit a voltage provided to the controller, and in particular to the first and/or second input terminal of the controller, to a maximum value. In particular, the overvoltage protection unit comprises a first diode configured to limit a voltage provided to the first input terminal of the controller, and a second diode configured to limit a voltage provided to the second input terminal.

For example, the first diode may be connected between the first input terminal and a reference terminal, and the second diode may be connected between the second input terminal and the reference terminal. The reference terminal may be a power supply terminal of the controller, which may be supplied with electrical power from the energy generating unit via a voltage regulator. The diode may be connected downstream of a resistor for discharging the signal storage unit. Thereby, a short circuit via the diode may be avoided when charging with a higher voltage.

The first and/or second diodes are preferably Schottky-diodes. Preferably, the diodes used in the electrical storage circuit and the overvoltage protection unit are of the same type or have the same configuration. This results in fewer different components and therefore lower component costs.

Preferably, the respective diode switches on or through if the incoming voltage at the input terminals of the controller is greater than or reaches a predefined value, preferably at least 0.2 V, e.g. 2.5 V (depending on the type of diode), above the power supply voltage U_BAT at the reference terminal. As a result, the voltage at the controller's input terminals are limited due to the overvoltage protection unit. For example, the voltage applied to the input terminals of the controller does not exceed a voltage value of 0.3 V above the supply voltage U_BAT. Due to the overvoltage protection unit damage to the controller and in particular the input terminals of the controller may be prevented.

According to a further embodiment of the invention, a system for controlling a function of a machine is provided. The system comprises an operating device having any of the configurations disclosed herein, and a receiver device having a receiver unit configured to wirelessly receive the first control signal and/or the second control signal transmitted by the controller of the operating device.

Preferably, the receiver unit is coupled to a controller (in particular a controller of the machine), wherein the controller is configured to activate a first functional state of the function of the machine when the first control signal is received and to maintain the first functional state or activate a second functional state, which is different from the first functional state, when the second control signal is received. In particular, the receiver device comprises a controller comprising the receiver unit, wherein the controller of the receiver device is coupled to a controller of the machine for controlling the function of the machine.

The system may comprise at least two operating devices having any of the configurations disclosed herein and the receiver device, wherein the receiver device is configured to receive the first control signal or the second control signal transmitted by the controller of a first and/or a second operating device. The first operating device may be configured to control a first function of the machine (e.g. a light of the machine) and the second operating device may be configured to control a second function of the machine (e.g. a horn of the machine) which is different from the first function.

Preferably, as mentioned above, the controller of the operating device generates a message being based on the first or second control signal. The message may include further information such as a specific function ID and/or a transmitter address. The controller is preferably configured to activate a first functional state of the function associated with the function ID when (a message indicating) the first control signal is received and to maintain the first functional state or activate a second functional state of the function associated with the function ID, which is different from the first functional state, when (a message indicating) the second control signal is received.

For example, the first control signal represents "pressing" of a knob and the second control signal represents "releasing" of the knob and the function ID is assigned to controlling of a horn of the machine. "Pressing" the knob may turn on the horn (first functional state) and "releasing" the knob may turn off the horn (second functional state).

In another example, the first control signal represents "pressing" of a knob and the second control signal represents "releasing" of the knob and the function ID is assigned to controlling of a specific light of the machine. "Pressing" the knob may switch the light on (first functional state) and "releasing" the knob may keep the light on (first functional state maintained). Because several messages may be sent by the operating device to the receiver unit when the knob is pressed, the light would repeatedly switch between on and off and may end in an undefined state. Preferably, the switching of the light may thus be only enabled again when the "release" signal of the knob is received (i.e. only after receiving the "release" signal, pressing the knob again switches the light off).

Alternatively or additionally, the controller may be configured to activate or stop a timer when the first and/or second control signal is received by the receiver unit.

The skilled person will be aware that the detection of the first and second actuation signals and the transmission of the first or second control signals based on the first or second detection signals can be used on the receiver unit side to control a wide range of different functions of the machine.

For example, the signal can be used to activate the power take-off shaft of the machine to drive a drive shaft of an add-on device. In particular, the power take-off shaft can be activated by pressing a knob of the operating device twice and then holding the knob for a predetermined time period. Releasing the knob before the time limit is expired or pressing it again may deactivate the power take-off shaft.

In another example, the first or second control signal can be used to control a lifting gear or hydraulics of the machine. In particular, two knobs (i.e. a first knob of a first operating device and a second knob of a second operating device) may be pressed simultaneously for a predetermined time, to activate the lifting gear function, wherein, after the predetermined time is expired, pressing the first knob may raise the lifting gear and pressing the second knob may lower the lifting gear.

According to a further embodiment of the invention, a machine, in particular a vehicle, comprising an operating device having any of the configurations disclosed herein is provided. The operating device is configured and arranged to control one or more functions of the machine by actuation of the energy generating unit by a user and in particular by actuation of a knob comprised in the operating device. Such machine may for example be an agricultural vehicle, a construction vehicle, an industrial vehicle, or the like.

In particular, the machine may comprise the operating device and the receiver unit as disclosed herein.

According to a further embodiment of the invention, a method of operating an operating device for controlling a function of a machine, in particular an operating device having any of the configurations disclosed herein, is provided. The operating device comprises: an energy generating unit configured to generate electrical energy upon actuation by a user of the operating device, wherein the energy generating unit is actuatable in a first direction (push) and is actuatable in a second direction (release); and a controller at least partly operated with electrical energy generated by the energy generating unit. The method comprises: transmitting, by the controller, upon actuation of the energy generating unit in the first direction, a first control signal indicating the actuation in the first direction, and transmitting, by the controller, upon actuation of the energy generating unit in the second direction, a second control signal indicating the actuation in the second direction.

By such machine or method, advantages may be achieved that correspond to the advantages outlined further above with respect to the operating device.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing components of an operating device according to an embodiment.
Fig. 2 is a schematic drawing showing the operating device of Fig. 1 with an electrical storage circuit.
Fig. 3 is a schematic drawing showing the operating device of Fig. 1 with a logical storage circuit.
Fig. 4 is a transmitter state diagram representing the functioning of the controller according to an embodiment.
Fig. 5 is a transmitter state diagram representing a message transmission process according to an embodiment.
Fig. 6 is a receiver state diagram representing a scan mode according to an embodiment.
Fig. 7 is a transmitter state diagram representing controlling of a light of a machine according to an embodiment.
Fig. 8 is a transmitter state diagram representing controlling of a horn of a machine according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as openended terms (i.e., meaning "including, but not limited to,") unless otherwise noted.

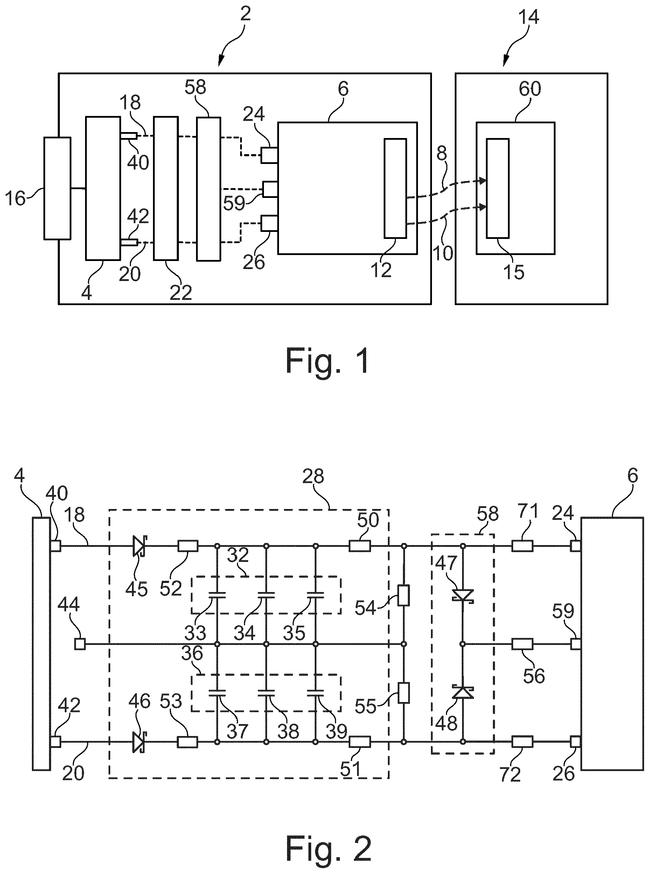

Fig. 1 is a schematic drawing showing components of an operating device 2 for controlling a function of a machine according to an embodiment.

The operating device 2 comprises an energy generating unit 4 (e.g. an energy harvester) which is configured to generate electrical energy upon actuation by a user of the operating device 2 and in particular upon actuation by a user of an operating element such as a knob 16 coupled to the energy generating unit 4. By pressing the knob 16, the energy generating unit 4 is actuated in a first direction and, by releasing the pressed knob 16, the energy generating unit 4 is actuated in the second direction. The operating device 2 is preferably a self-contained operating device without any cable connection for receipt of electrical power or transmission of a control signal.

The energy generating unit 4 may be configured to generate a first actuation signal 18 upon actuation in the first direction and to generate a second actuation signal 20 upon actuation in the second direction, wherein the operating device 2 comprises a signal storage unit 22 configured to store the first actuation signal 18 upon generation thereof and to store the second actuation signal 20 upon generation thereof. The time required for the controller 6 to start up and read its inputs may be longer than the duration of the first or second actuation signal or the voltage signal provided at the terminals of the energy generating unit 4. As a result, the voltage provided at the energy generating unit 4 has already dropped before the controller 6 is ready for operation, which makes it impossible to detect the first or second actuation signal 18, 20. The storage unit 22 makes it possible to store the first and/or second actuation signals 18, 20 in a distinguishable way, at least until the controller 6 has booted up and its input terminals are ready to read in the stored first and/or second actuation signals.

In particular, the energy generating unit 4 comprises a first terminal 40 and a second terminal 42, wherein, upon actuation in the first direction, the first actuation signal 18 is applied at the first terminal 40 and upon actuation in the second direction, the second actuation signal 20 is applied at the second terminal 42. For example, upon actuation in the respective direction, a voltage may be generated across the first and second terminals 40, 42 of the energy generating unit (first actuation signal 18) and a voltage of reverse polarity may be generated across the first and second terminals 40, 42 of the energy generating unit (second actuation signal 20).

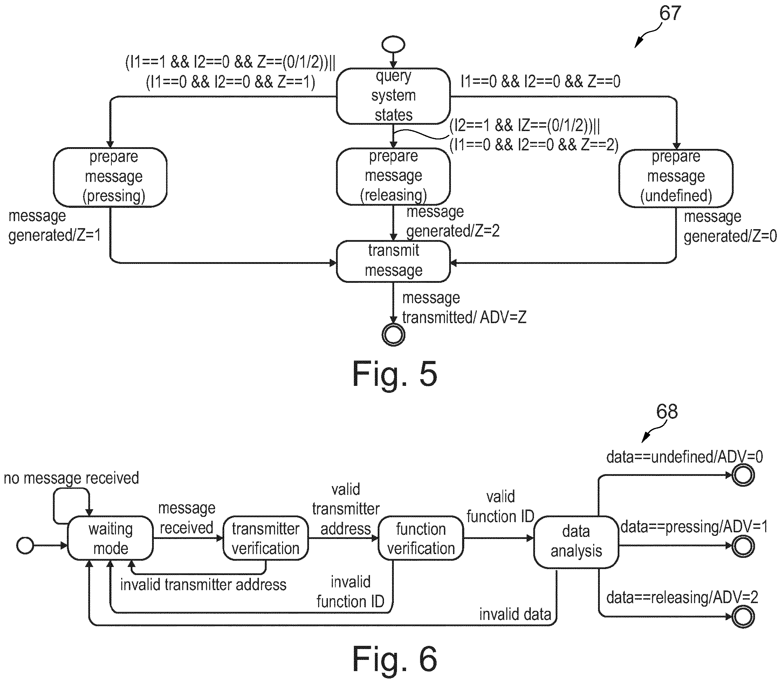

The operating device 2 further comprises a controller 6 configured, upon actuation of the energy generating unit 4 in the first direction, to transmit a first control signal 8 indicating the actuation in the first direction, and upon actuation of the energy generating unit in the second direction, to transmit a second control signal 10 indicating the actuation in the second direction. Preferably, the first or second control signal 8, 10 is transmitted as a message that indicates the actuation direction and that includes further information such as a function ID associated with the function to be controlled by the operating device and/or a transmitter address associated with the operating device 2. As shown in below Fig. 5, the message may include an actuation state "ADV". In case the first control signal 8 is generated, the actuation state may be "ADV = 1" corresponding to a "pressing" of the knob 16 (i.e. generation of first actuation signal 18 at energy generating unit 4). In case the second control signal 10 is generated, the actuation state may be "ADV = 2" corresponding to a "releasing" of the knob 16 (i.e. generation of second actuation signal 20 at energy generating unit 4) - see Fig. 5.

Controller 6 may further be configured to detect an error state of the operating device 2, for example if the signals generated by the energy generating unit 4 overlap. Respective first and second actuation signals may for example be stored, as explained in more detail below, and if the time during which the first and second actuation signals are stored overlaps (so that the state of the operating device cannot be determined reliably), a respective error state may be detected. As another example, an error state may be detected if an electrical component of the operating device fails, if an electrical connection of the operating device loses contact (e.g., a broken wire), and/or the like. Controller 6 may further be configured to transmit a third control signal upon detection of an error state. The third control signal may for example be an error message.

The controller 6 may comprise a transmitter unit 12 configured to transmit wirelessly the first and/or second control signals 8, 10 (or message) generated by the controller 6 to a receiver unit 15 of a receiver device 14 (and optionally the third control signal, or error message). The transmitter unit 12 is preferably a Bluetooth transmitter configured to transmit the control signals via Bluetooth, in particular via Bluetooth Low Energy, BLE or by means of any other suitable communication standard, such as ZigBee, Wifi, RFID, or EnOcean.

The receiver device 14 may comprise a controller 60 (receiver unit 15 is preferably comprised in the controller 60 as shown in Fig. 1). The controller 60 of the receiver device 14 is preferably coupled to a controller (in particular a controller of the machine; not shown). The controller of the machine is preferably configured to activate a first functional state of the function of the machine when the first control signal 8 is received and to maintain the first functional state or activate a second functional state, which is different from the first functional state, when the second control signal 10 is received.

The controller 6 may be configured to generate and transmit the first control signal 8 upon reading the stored first actuation signal 18 from the signal storage unit 22 and is configured to generate and transmit the second control signal 10 upon reading the stored second actuation signal 20 from the signal storage unit 22. The controller 6 may comprise a first input terminal 24 configured to read the stored first actuation signal 18 from the signal storage unit 22 and a second input terminal 26 configured to read the stored second actuation signal 20 from the signal storage unit 22.

The operating device 2 may comprise an overvoltage protection unit 58 configured to limit a voltage provided to the controller 6, and in particular to the first and/or second input terminal 24, 26 of the controller, to a maximum value. In particular, the overvoltage protection unit 58 is configured to limit the voltage provided by the signal storage unit 22. The maximum value is preferably below a maximum permissible value for the input terminals 24, 26 of the controller.

The controller 6 is at least partly operated with electrical energy generated by the energy generating unit 4, and in particular with a power supply voltage U_BAT provided at an input 59 of the controller 6. Preferably, the power supply voltage of the controller 6 is provided by a voltage regulator (not shown) as U_BAT, for example by a low dropout regulator (LDO). The regulator may be coupled via a rectifier (not shown) to the output terminals of the energy generating unit 4. Due to the limited amount of energy available for the operating device 2 (e.g., only the energy provided by the energy generating unit), the voltage in the signal storage unit 22 and the supply voltage U_BAT of the controller 6 decrease over time. In particular, the most energy is initially consumed to start the controller 6 and make the input terminals 24, 26 ready to read in signals. After the first or second control signal 8, 10 has been sent by the transmitter unit 12, the controller switches to a sleep mode in which almost no energy is consumed and is only woken up again shortly before another message is sent. Preferably, messages (i.e. the first or second control signal 8, 10) are sent by the transmitter unit 12 repeatedly at predefined intervals until the supply voltage U_BAT of the controller 6 falls below a minimum value. The probability that the message is received and not lost is thereby increased.

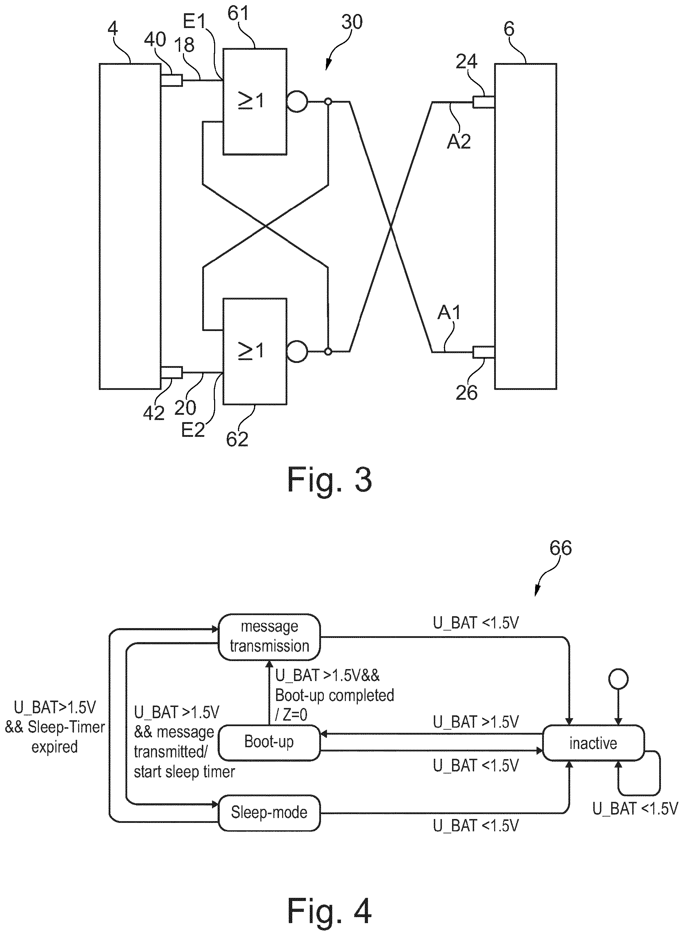

The following Figures 2 and 3 describe two different implementations for the signal storage unit 22. Fig. 2 shows an electrical storage circuit 28, and Fig. 3 shows a logical storage circuit 30.

Fig. 2 is a schematic drawing showing the operating device of Fig. 1 with the electrical storage circuit 28. The electrical storage circuit 28 may comprise a first capacitor unit 32 having at least one capacitor 33-35 and being coupled to the first terminal 40 of the energy generating unit transmitting the first actuation signal 18. The electrical storage circuit 28 may further comprise a second capacitor unit 36 having at least one capacitor 37-39 and being coupled to the second terminal 42 of the energy generating unit transmitting the second actuation signal 20. As shown in Fig. 2, each capacitor unit 32, 36 comprises three capacitors 33-35, 37-39 being connected parallel between the respective terminal 40, 42 and ground 44. However, any other number such as one, two or four capacitors is also applicable.

The first capacitor unit 32 is preferably configured to store the first actuation signal 18 by charging of the first capacitor unit 32 from electrical power, and in particular from a voltage signal, provided on the first terminal 40 and the second capacitor unit 36 is preferably configured to store the second actuation signal 20 by charging of the second capacitor unit 36 from electrical power, and in particular from a voltage signal, provided on the second terminal 42. The other side of each capacitor 33-35, 37-39 may be electrically connected to a common ground 44.

The electrical storage circuit 28 may comprise a first diode 45 electrically connected in series between the first terminal 40 of the energy generating unit and the first capacitor unit 32 and a second diode 46 electrically connected in series between the second terminal 42 of the energy generating unit and the second capacitor unit 36. The first and second diodes 45, 46 may be configured to prevent the first and second capacitor units 32, 36 from being discharged in the direction of the energy generating unit 4. The first and second diodes 45, 46 may be Schottky diodes.

The electrical storage circuit 28 may comprise a first resistor 50 electrically connected in series between the first capacitor unit 32 and the controller 6, and a second resistor 51 electrically connected in series between the second capacitor unit 36 and the controller 6. The first actuation signal 18 is read by discharging of the first capacitor unit 32 via the first resistor 50 and the second actuation signal 20 is read by discharging of the second capacitor unit 36 via the second resistor 51. The speed of discharging the capacitor units 32, 36 towards input terminals 24, 26 can thereby be controlled. The first and/or second resistor may for example have a resistance of about 100 kΩ.

The electrical storage circuit 28 may further comprise a third resistor 52 electrically connected in series between the capacitor unit 33 and the diode 45 and a fourth resistor 53 electrically connected in series between the capacitor unit 36 and the diode 46.

Further, a fifth resistor 54 may be electrically connected in parallel to the first capacitor unit 32, in particular between the terminal 40 and the ground 44 and/or a sixth resistor 55 may be electrically connected in parallel to the second capacitor unit 36, in particular between the terminal 42 and the ground 44. Resistors 54, 55 may act as pull-down resistors to define a clear "low"-signal at the respective terminal until an activation signal is provided at the respective terminal. The fifth and/or sixth resistor 54, 55 may have a resistance of 750 kΩ.

A seventh resistor 56 may be electrically connected between the overvoltage protection unit 58 and the input 59 of the controller.

A eight resistor 71 may be electrically connected between the overvoltage protection unit 58 and the first input terminal 24, and/or a ninth resistor 72 may be electrically connected between the overvoltage protection unit 58 and the second input terminal 26. The resistors 71, 72 may limit the current flow towards the input terminals 24, 26.

The overvoltage protection unit 58 may comprise a third diode 47 configured to limit a voltage provided to the first input terminal 24 of the controller 6, and a fourth diode 48 configured to limit a voltage provided to the second input terminal 26 of the controller 6. The first and/or second diodes are preferably Schottky-diodes. Preferably, the diodes 45, 46, 47, 48 used in the electrical storage circuit 28 and the overvoltage protection unit 20 are of the same type or have the same configuration. This results in fewer different components and therefore lower component costs. Third and fourth diodes 47, 48 may be referenced to the power supply voltage U_BAT at the supply terminal 59 of the controller 6, at which the regulator (e.g. LDO regulator; not shown) may provide a constant voltage. For example, the third diode 47 may be connected between the first input terminal 24 and the supply terminal 59, and the fourth diode 48 may be connected between the second input terminal 26 and the supply terminal 59.

Fig. 3 is a schematic drawing showing the operating device 2 of Fig. 1 implemented as a logical storage circuit 30 (instead of the electrical storage circuit 28 shown in Fig. 2). In this case the logical storage circuit 30 is a RS-flipflop. The RS-flipflop 30 comprises a first and second input E1, E2 and a first and second output A1, A2, wherein the first input E1 is electrically connected or coupled to the first terminal 40 of the energy generating unit 4 and the second input E2 is electrically connected or coupled to the second terminal 42 of the energy generating unit 4. The first output A1 of the RS-flipflop 30 is electrically connected or coupled to the second input terminal 26 of the controller 6 and the second output A2 of the RS-flipflop 30 is electrically connected or coupled to the first input terminal 24 of the controller 6.

When the first actuation signal 18 is provided at the first terminal 40 of the energy generating unit 4 (and in particular no signal is provided at the second terminal 42), a signal "high" or "1" is applied to the first input E1 of the RS-flipflop 30 and a signal "low" or "0" is applied to the second input E2 of the RS-flipflop 30. Due to the logic circuit, then a signal "high" or "1" is applied to the second output A2 and a signal "low" or "0" is applied to the first output A1. In this case a voltage signal is read in at the first input terminal 24 of the controller 6 which is connected to the second output A2 of the RS-flipflop 30 and the controller 6 transmits the first control signal 8 (see Fig. 1).

When the second actuation signal 20 is provided at the second terminal 42 of the energy generating unit (and in particular no signal is provided at the first terminal 40), a "low" or "0" signal is applied to the first input E1 and a "high" or "1" signal is applied to the second input E2. Due to the logic circuit, then a "low" or "0" signal is applied to the second output A2 and a "high" or " 1" signal is applied to the first output A1. In this case a voltage signal is read in at the second input terminal 26 of the controller 6 which is connected to the first output A1 of the RS-flipflop 30 and the controller 6 transmits the second control signal 10 (see Fig. 1).

Preferably, the RS-flip flop 30 comprises two NOR gates 61, 62, wherein an input of the first NOR gate 61 is connected to the first terminal 40 of the energy generating unit 4 and an input of the second NOR gate 62 is connected to the second terminal 42 of the energy generating unit 4. In particular, the NOR gates 61, 62 are connected to each other via a cross-coupling. Preferably, an output of the first NOR gate 61 is connected to an input of the second NOR gate 62 and an output of the second NOR gate 62 is connected to an input of the first NOR gate 61. Preferably, an output of the first NOR gate 61 is connected to the first output A1 being connected to the second input terminal 26 and an output of the second NOR gate 62 is connected to the second output A2 being connected to the first input terminal 24.

Therefore, the signal at the output A1 or at the output A2 of the RS-flipflop 30 is preferably stored until the power supply voltage U_BAT falls below a power supply voltage of the flipflop 30 and in particular of the NOR gates 61, 62 (i.e. U_BAT) or until the signal applied at the inputs E1, E2 of the RS-flipflop 30 changes. Preferably, the NOR gates 61, 62 are operated at least partially by electrical power provided by the energy generating unit 4.

Fig. 4 is a transmitter state diagram 66 representing the functioning of the controller 6 according to an embodiment. The power supply voltage U_BAT of the controller 6 must have or exceed a minimum value so that the controller 6 can switch on and operate. As long as U_BAT is less than a threshold, for example less than 1.5 V, the controller 6 remains in an "inactive" state. If, upon generation of the first or second actuation signal 18, 20, the power supply voltage U_BAT at the controller 6 is equal to or exceeds the threshold, for example U_BAT is greater than or equal to 1.5 V, the controller 6 switches to a "boot-up" state. The "boot-up" state may include, for example, switching on the controller, preparing the controller's input terminals so that they are ready to read signals such as the first and/or second actuation signals and/or preparing for data transmission (i.e. transmission of first or second control signals).

If the boot-up is completed and U_BAT is still above the threshold, for example above 1.5 V, the controller 6 switches to the state "message transmission". Preferably, when the controller 6 is started, the previous stored actuation state Z is set to a value of Z = 0, wherein Z = 0 corresponds to an undefined state.

If U_BAT falls below the threshold, for example below 1.5 V, after the message has been sent, the controller 6 switches back to the "inactive" state. If U_BAT is above the threshold, for example above 1.5 V, after the message has been sent to the receiver unit 15, a timer is preferably started and the controller 6 is set to a state "sleep mode" in order to save energy. When the timer has expired and U_BAT is still above the threshold, for example above 1.5 V, the controller 6 switches back to the state "message transmission" and a message is sent to the receiver unit 15. Thus, messages are transmitted at predetermined intervals, in particular always after the timer has expired. This is repeated preferably until the voltage U_BAT falls below the threshold. The state "message transmission" may include not only the wireless communication but also the complete logic for the signal processing of the output signal of the signal storage unit. The "message transmission" state is described in more detail below in Fig. 5.

Fig. 5 is a transmitter state diagram 67 representing a message transmission process according to an embodiment. Preferably, the controller 6 of the operating device generates a message being indicative of the first and/or second control signal 8, 10. Apart from the actuation state which is explained below, the message may include further information such as a specific function ID of a function of the machine to be controlled and/or a transmitter address.

First, the system states are retrieved in a state "query system states". "l1 = 1" corresponds to a detection of the first actuation signal 18 at the first terminal 24 of the controller 6 (e.g. as a result of pressing the knob 16 of the operating device) and "l2 = 1" corresponds to a detection of the second actuation signal 20 at the second terminal 26 of the controller (e.g. as a result of releasing the knob 16). "l1 = 0" is when no first actuation signal 18 is detected at the first terminal 24 of the controller 6 and "l2 = 0" is when no second actuation signal 20 is detected at the second terminal 26 of the controller 6.

"Z" corresponds to the previously stored state, where "Z = 0" is an undefined state, "Z = 1" corresponds to a "pressing" of the knob 16 and "Z = 2" corresponds to a "releasing" of the knob 16. "ADV" is the actuation state, which is transmitted, wherein preferably "ADV = 0" is an undefined state, "ADV = 1" corresponds to an actuation state of "pressing" of the knob 16 and "ADV = 2" corresponds to an actuation state of "releasing" of the knob 16.

When "l1 = 1" and "l2 = 0" (and Z has an arbitrary value), or when "l1 = 0" and "l2 = 0" and "Z = 1", a state "prepare message (pressing)" is reached, wherein a message indicating the pressing of the knob 16 is prepared and the actuation state Z is set to Z = 1 (pressing of knob).

When "l2 = 1" (and Z has an arbitrary value), or when "l1 = 0" and "l2 = 0" and "Z = 2", a state "prepare message (releasing)" is reached, wherein a message indicating the releasing of the knob 16 is prepared and the actuation state Z is set to Z = 2 (releasing of knob).

When "l1 = 0" and "l2 = 0" and Z = 0, a state "prepare message (undefined)" is reached, wherein a message indicating an undefined actuation state of the knob 16 is prepared and the actuation state Z is set to Z = 0 (undefined).

Finally, a message is transmitted from the operating device 2 to the receiver unit 15 (see Fig. 1) with the transmitted actuation state ADV = Z. Preferably, "ADV = 1" corresponds to the first control signal 8 described herein, and "ADV = 2" corresponds to the second control signal 10 described herein.

In the following, the focus is on the receiver side, which receives the messages transmitted by the transmitter unit 12 and communicates with the controller of the machine.

Fig. 6 is a receiver state diagram 68 representing a scan mode according to an embodiment. After the receiver unit 15 has booted up and the "boot-up" process has been completed, it remains in a "scan mode", which is illustrated in Fig. 6. In particular, in a "waiting mode", the receiver unit 15 continuously waits for incoming messages from the transmitter unit 12.

When a message is received, a "transmitter verification" state is reached in which the transmission address is verified. The message is only processed further if it comes from a valid transmitter address. When the message is from a valid transmitter address the function ID of the function to be controlled is verified in a "function verification" state. The message is only processed further if it comprises a valid function ID. If the function ID is valid, further data such as the transmitted actuation status are analyzed in a "data analysis" state. The message is only processed further if it includes valid data such as an actuation status ADV. The received actuation status ADV is interpreted, and the controller of the machine is configured to control a function of the machine which is associated with the function ID of the received message in dependency of the transmitted actuation state ADV.

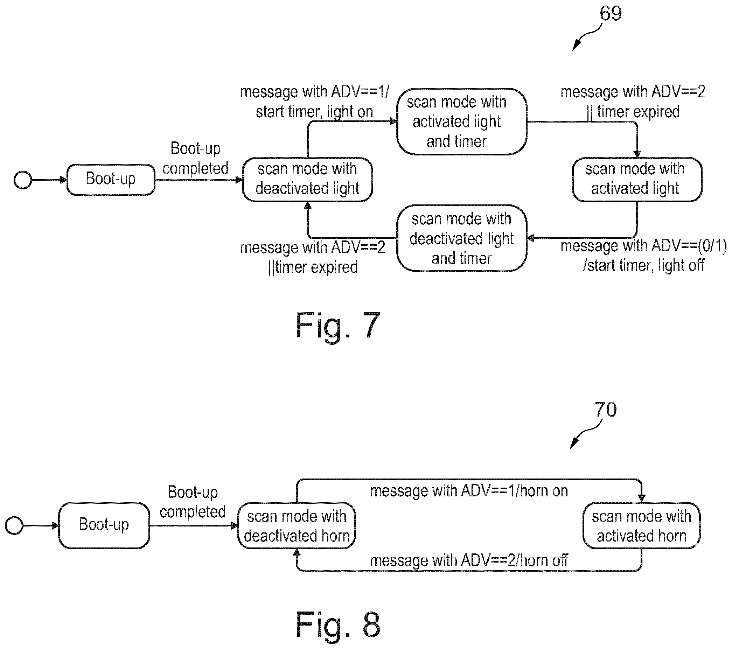

In the following two examples for controlling of a function of the machine in dependency of the received actuation states of the operating device are described. The examples shown in Fig. 7 and 8 are only examples of controlling functions of a machine. The skilled person is fully aware that the operating device 2 can also be used for controlling other functions of a machine and that the invention is not limited to the examples described herein.

Fig. 7 is a transmitter state diagram 69 representing controlling of a light of the machine according to an embodiment. After the receiver unit 15 has booted up and the "boot-up" process has been completed, it remains in a "scan mode with deactivated light" in which the receiver unit 15 continuously waits for incoming messages from the transmitter unit 12. When a message with a function ID associated with a light of the machine and "ADV = 1" indicating a pressing of the knob 16 is received, the light is turned on and preferably a timer is started.

The receiver unit 15 then remains in a "scan mode with activated light (and timer)" in which the receiver unit 15 continuously waits for incoming messages from the transmitter unit 12. When a message with the function ID associated with the light of the machine and "ADV = 2" indicating a releasing of the knob 16 is received, the light is maintained in a switched on state. Because several messages are sent by the operating device 2 to the receiver unit 15 when the knob 16 is pressed, the light would constantly switch between on and off. Preferably, the switching of the light is thus only enabled again when a message with "ADV = 2" indicating a releasing of the knob 16 is received or the timer is expired (i.e. only after receiving the "release" message (ADV = 2) or the timer is expired, pressing of the knob 16 again switches the light off).

Without the timer, the loss of all release messages (ADV = 2) would result in a blocked state, meaning that the light could no longer be controlled. The timer makes it possible to switch back after the timer has expired even if all release messages are lost.

When a message with the function ID associated with the light of the machine with "ADV = 2" is received or the timer is expired, the receiver unit 15 remains in a "scan mode with activated light" in which the receiver unit 15 continuously waits for incoming messages from the transmitter unit 12.

When a message with the function ID associated with the light of the machine and "ADV = 1" indicating a pressing of the knob 16 (or ADV = 0 indicating an undefined actuation state) is received, the light is turned off and preferably a timer is started. The receiver unit 15 then remains in a "scan mode with deactivated light and timer" in which the receiver unit 15 continuously waits for incoming messages from the transmitter unit 12. When a message with the function ID associated with the light of the machine with "ADV = 2" is received or the timer is expired, the receiver unit 15 remains in a "scan mode with deactivated light" until a new message for controlling the light of the machine is received.

Because the timer is automatically deactivated when a message is received with "ADV = 2" (release of knob 16), it is possible to switch the light on and off quickly despite the timer.

Fig. 8 is a transmitter state diagram 70 representing controlling of a horn of the machine according to an embodiment. After the receiver unit 15 has booted up and the "boot-up" process has been completed, it remains in a "scan mode with deactivated horn" in which the receiver unit 15 continuously waits for incoming messages from the transmitter unit 12. When a message with a function ID associated with a horn of the machine and "ADV = 1" indicating a pressing of the knob 16 is received, the horn is turned on.

The receiver unit 15 then remains in a "scan mode with activated horn" in which the receiver unit 15 continuously waits for incoming messages from the transmitter unit 12. When a message with a function ID associated with the horn of the machine and "ADV = 2" indicating a releasing of the knob 16 is received, the horn is turned off. Then the receiver unit 15 remains again in a "scan mode with deactivated horn" until a new message for controlling the horn of the machine is received.

By embodiments of the solution disclosed herein, it may thus become possible to detect the actuation state of the operating device more reliably. As shown above, the first and/or second actuation signals generated by the energy generating unit and being provided at the terminals of the energy generating unit can be read in at different input terminals of the controller so that the controller is configured to differentiate between for example a pressing and releasing of a knob of the operating element and to transmit the first control signal when the knob is pressed or the second control signal when the knob is released. Thus, by pressing and releasing the knob, different functional states of the machine can be activated. In addition, no cables need to be laid for the operating device and no additional energy source is required (the energy provided by the energy generating unit is sufficient for the operating device to operate).

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### List of reference signs

- 2: operating device
- 4: energy generating unit (e.g. energy harvester)
- 6: controller of operating device
- 8: first control signal
- 10: second control signal
- 12: transmitter unit
- 14: receiver device
- 15: receiver unit
- 16: knob
- 18: first actuation signal
- 20: second actuation signal
- 22: signal storage unit
- 24: first input terminal of controller
- 26: second input terminal of controller
- 28: electrical storage circuit
- 30: logical storage circuit (e.g. RS-flipflop)
- 32: first capacitor unit
- 33-35: first / second / third capacitor of first capacitor unit
- 36: second capacitor unit
- 37-39: first / second / third capacitor of second capacitor unit
- 40: first terminal of energy generating unit
- 42: second terminal of energy generating unit
- 44: ground
- 45-48: first / second / third / fourth diode (e.g. Schottky diodes)
- 50-56: first / second / third / fourth / fifth / sixth / seventh resistor
- 58: overvoltage protection unit
- 59: input for power supply
- 60: controller of receiver device
- 61-62: first / second NOR-gate
- 66-67: transmitter state diagram
- 68-70: receiver state diagram
- 71, 72: eight / ninth resistor
- E1, E2: first / second input of RS-flipflop
- A1, A2: first / second output of RS-flipflop
- U_BAT: power supply voltage of controller
- Z: previous stored actuation state of operating device
- ADV: transmitted actuation state of operating device
- 11: parameter indicating the detection of a first actuation signal at a first input terminal of the controller
- 12: parameter indicating the detection of a second actuation signal at a second input terminal of the controller

## Claims

1. Operating device (2) for controlling a function of a machine, wherein the operating device (2) comprises:
an energy generating unit (4) configured to generate electrical energy upon actuation by a user of the operating device (2), wherein the energy generating unit (4) is actuatable in a first direction and is actuatable in a second direction and is configured to generate the electrical energy when actuated in the first direction and/or in the second direction; and
a controller (6) configured to transmit, upon actuation of the energy generating unit (4) in the first direction, a first control signal (8) indicating the actuation in the first direction, and upon actuation of the energy generating unit (4) in the second direction, to transmit a second control signal (10) different from the first control signal and indicating the actuation in the second direction,
wherein the controller (6) is at least partly operated with electrical energy generated by the energy generating unit (4).

2. Operating device according to claim 1, wherein the operating device (2) is a self-contained operating device without any cable connection for receipt of electrical power or transmission of a control signal.

3. Operating device according to claim 1 or 2, wherein the controller (6) comprises a transmitter unit (12) configured to transmit wirelessly the first and/or second control signal (8, 10) generated by the controller (6) to a receiver unit (15), and
wherein preferably, the transmitter unit (12) is a Bluetooth, ZigBee, Wifi, RFID, or EnOcean transmitter, in particular a Bluetooth Low Energy, BLE, transmitter.

4. Operating device according to any of the preceding claims, wherein the operating device (2) comprises a knob (16), and
wherein by pressing the knob (16), the energy generating unit (4) is actuated in the first direction and by releasing the pressed knob (16), the energy generating unit (4) is actuated in the second direction.

5. Operating device according to any of the preceding claims, wherein the energy generating unit (4) is configured to generate a first actuation signal (18) upon actuation in the first direction and to generate a second actuation signal (20) upon actuation in the second direction, wherein the operating device (2) comprises a signal storage unit (22) configured to store the first actuation signal (18) upon generation thereof and to store the second actuation signal (20) upon generation thereof.

6. Operating device according to claim 5, wherein the controller (6) is configured to generate and transmit the first control signal (8) upon reading the stored first actuation signal (18) from the signal storage unit (22) and is configured to generate and transmit the second control signal (10) upon reading the stored second actuation signal (20) from the signal storage unit (22).

7. Operating device according to claim 5 or 6, wherein the controller (6) comprises a first input terminal (24) configured to read the stored first actuation signal (18) from the signal storage unit (22) and a second input terminal (26) configured to read the stored second actuation signal (20) from the signal storage unit (22).

8. Operating device according to any of claims 5 to 7, wherein the signal storage unit (22) comprises an electrical storage circuit (28) or a logical storage circuit (30).

9. Operating device according to claim 8, wherein the electrical storage circuit (28) comprises a first capacitor unit (32) coupled to a first terminal (40) of the energy generating unit that gives out the first actuation signal (18) and a second capacitor unit (36) coupled to a second terminal (42) of the energy generating unit that gives out the second actuation signal (20), wherein each of the first and second capacitor units (32, 36) has at least one capacitor (33-35, 37-39), and
wherein the first capacitor unit (32) is configured to store the first actuation signal (18) by charging of the first capacitor unit (32) from electrical power provided by the first actuation signal on the first terminal (40) and the second capacitor unit (36) is configured to store the second actuation signal (20) by charging of the second capacitor unit (36) from electrical power provided by the second actuation signal on the second terminal (42).

10. Operating device according to claim 9, wherein the electrical storage circuit (28) comprises a first diode (45) electrically connected in series between the first terminal (40) of the energy generating unit and the first capacitor unit (32), and/or a second diode (46) electrically connected in series between the second terminal (42) of the energy generating unit and the second capacitor unit (36), and
wherein the first and/or second diode (45, 46) is configured to prevent the first and/or second capacitor unit (32, 36) from being discharged in the direction of the energy generating unit (4),
wherein preferably, the first and/or second diode (45, 46) is a Schottky diode.

11. Operating device according to claim 9 or 10, wherein the electrical storage circuit (28) comprises a first resistor unit having at least one resistor (50) electrically connected in series between the first capacitor unit (32) and the controller (6), and a second resistor unit having at least one resistor (51) electrically connected in series between the second capacitor unit (36) and the controller (6), and
wherein the first actuation signal (18) is read by discharging of the first capacitor unit (32) via the first resistor unit and the second actuation signal (20) is read by discharging of the second capacitor unit (36) via the second resistor unit.

12. Operating device according to any of the preceding claims, wherein the operating device (2) comprises an overvoltage protection unit (58) configured to limit a voltage provided to the controller (6), and in particular to the first and/or second input terminal (24, 26) of the controller, to a maximum value.

13. System for controlling a function of a machine, comprising:
the operating device (2) according to any of the preceding claims, and
a receiver device (14) having a receiver unit (15) configured to wirelessly receive the first control signal (8) and/or the second control signal (10) transmitted by the controller (6) of the operating device (2).

14. System according to claim 13, wherein the receiver unit (15) is coupled to a controller (60), and wherein the controller is configured to activate a first functional state of the function of the machine when the first control signal (8) is received and to maintain the first functional state or activate a second functional state, which is different from the first functional state, when the second control signal (10) is received.

15. Method of operating an operating device (2) for controlling a function of a machine, in particular the operating device according to any of claims 1 to 12, wherein the operating device (2) comprises: an energy generating unit (4) configured to generate electrical energy upon actuation by a user of the operating device, wherein the energy generating unit (4) is actuatable in a first direction and is actuatable in a second direction and is configured to generate the electrical energy when actuated in the first direction and/or in the second direction; and a controller (6) at least partly operated with electrical energy generated by the energy generating unit (4),
wherein the method comprises:
- transmitting, by the controller (6), upon actuation of the energy generating unit (4) in the first direction, a first control signal (8) indicating the actuation in the first direction, and
- transmitting, by the controller (6), upon actuation of the energy generating unit (4) in the second direction, a second control signal (10) indicating the actuation in the second direction.
